(19) Europäisches Patentamt / European Patent Office / Office européen des brevets

(11) **EP 4 692 234 A1**

(12) **EUROPEAN PATENT APPLICATION**
published in accordance with Art. 153(4) EPC

(43) Date of publication:
**11.02.2026 Bulletin 2026/07**

(21) Application number: **24779042.1**

(22) Date of filing: **29.02.2024**

(51) International Patent Classification (IPC):
$C08L\ 69/00^{(2006.01)}$   $C08K\ 5/101^{(2006.01)}$
$C08K\ 5/103^{(2006.01)}$   $C08L\ 25/12^{(2006.01)}$
$C08L\ 51/04^{(2006.01)}$   $C08L\ 51/06^{(2006.01)}$

(52) Cooperative Patent Classification (CPC):
**C08K 5/101; C08K 5/103; C08L 25/12; C08L 51/04; C08L 51/06; C08L 69/00**

(86) International application number:
**PCT/JP2024/007558**

(87) International publication number:
**WO 2024/202903 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023052919**

(71) Applicant: **Techno-UMG Co., Ltd.**
**Tokyo 105-0021 (JP)**

(72) Inventors:
• **HAYASHI, Ichiyo**
  **Tokyo 105-0021 (JP)**
• **SHINOHARA, Yoshiaki**
  **Tokyo 105-0021 (JP)**

(74) Representative: **Lavoix**
**Bayerstraße 83**
**80335 München (DE)**

(54) **THERMOPLASTIC RESIN COMPOSITION AND MOLDED ARTICLE**

(57)    A thermoplastic resin composition includes a polycarbonate resin (A), a rubber-reinforced vinyl-based resin (B), a non-rubber-reinforced vinyl-based resin (C), and a lubricant (D), in which the rubber-reinforced vinyl-based resin (B) includes an ethylene/α-olefin-based rubber-reinforced resin (B1) obtained by graft polymerization of a vinyl-based monomer in a presence of at least an ethylene/α-olefin-based rubbery polymer (b1), the non-rubber-reinforced vinyl-based resin (C) is a copolymer having at least an acrylonitrile unit and a styrene unit, and the lubricant (D) is a lubricant having a saturated fatty acid ester having 12 or more carbon atoms.

## Description

TECHNICAL FIELD

The present invention relates to a thermoplastic resin composition and a molded article. Priority is claimed on Japanese Patent Application No. 2023-052919, filed March 29, 2023, the content of which is incorporated herein by reference.

BACKGROUND ART

A rubber-modified graft polymer such as an ABS resin or an AES resin is a material having excellent mechanical strength and moldability, but in some cases, the rubber-modified graft polymer may be insufficient in heat resistance and impact resistance in use for applications (automobile components, OA components, and the like) where heat resistance and high impact resistance are required. Meanwhile, a polycarbonate-based resin is a material having excellent heat resistance and impact resistance, but may have insufficient moldability. As a method of compensating for the above-described disadvantages, a method of blending a polycarbonate-based resin and a rubber-modified graft polymer is known.

Such a material has been used as an automobile interior component, and PC/ABS obtained by blending a polycarbonate and an ABS resin has been widely used as the material. Further, in recent years, with the spread of HV vehicles and EV vehicles, there has been an increasing demand for quietness in vehicles, and an AES resin having excellent quietness has been used as a substitute material for an ABS resin.

However, in a case where the amount of AES required to sufficiently ensure the quietness is used, a problem such as deterioration of color developability occurs.

As a composition of an AES resin having excellent quietness and color developability, a thermoplastic resin composition containing an AES resin and a methacrylic acid ester resin has been suggested (Patent Document 1).

In addition, a thermoplastic resin composition containing a fatty acid ester as a lubricant for imparting the abnormal sound prevention properties has also been suggested (Patent Document 2).

However, in Patent Document 1, since a methacrylic acid ester resin is used without examination on a copolymer of acrylonitrile and styrene as a non-rubber-reinforced resin, the properties such as the fluidity and the mechanical strength are degraded. Further, Patent Document 2 discloses that the fatty acid ester contributes to the abnormal sound prevention properties, but does not examine the viewpoint of long-term stability of a squeaking sound reduction effect due to bleed-out or the like.

Citation List

Patent Documents

Patent Document 1: Japanese Unexamined Patent Application, First Publication No. 2018-95722
Patent Document 2: Japanese Unexamined Patent Application, First Publication No. 2021-31561

SUMMARY OF INVENTION

Technical Problem

The present invention provides a resin composition and a molded article thereof, which have excellent mechanical properties, color developability, and quietness by using a specific saturated fatty acid ester in combination even in a case where an ethylene/$\alpha$-olefin-based rubber-reinforced resin is used as a rubber-reinforced vinyl-based resin.

Solution to Problem

The present invention has the following aspects.

[1] A thermoplastic resin composition including: a polycarbonate resin (A); a rubber-reinforced vinyl-based resin (B); a non-rubber-reinforced vinyl-based resin (C); and a lubricant (D), in which the rubber-reinforced vinyl-based resin (B) includes an ethylene/$\alpha$-olefin-based rubber-reinforced resin (B1) obtained by graft polymerization of a vinyl-based monomer in a presence of at least an ethylene/$\alpha$-olefin-based rubbery polymer (b1), the non-rubber-reinforced vinyl-based resin (C) is a copolymer having at least an acrylonitrile unit and a styrene unit, the lubricant (D) is a lubricant having a saturated fatty acid ester having 12 or more carbon atoms, and in a case where a total amount of the polycarbonate resin (A), the rubber-reinforced vinyl-based resin (B), and the non-rubber-reinforced vinyl-based resin (C) is set to 100 parts by mass, the thermoplastic resin composition contains 30 to 70 parts by mass of the polycarbonate resin (A), 3 to 16 parts by mass of the rubber-reinforced vinyl-based resin (B), 3 to 16 parts by mass of the ethylene/$\alpha$-olefin-based rubber-reinforced resin (B1), and 1 to 8 parts by mass of the lubricant (D).

[2] The thermoplastic resin composition according to [1], in which in a case where the total amount of the polycarbonate resin (A), the rubber-reinforced vinyl-based resin (B), and the non-rubber-reinforced vinyl-based resin (C) is set to 100 parts by mass, the thermoplastic resin composition contains 20 to 60 parts by mass of the non-rubber-reinforced vinyl-based resin (C).

[3] The thermoplastic resin composition according to [1] or [2], in which the lubricant (D) is at least one kind of hydrogenated glycerin fatty acid ester.

[4] The thermoplastic resin composition according to any one of [1] to [3], in which the rubber-reinforced vinyl-based resin (B) further includes a diene-based rubber-reinforced resin (B2) obtained by graft polymerization of a vinyl-based monomer in a presence of a diene-based rubbery polymer (b2).

[5] A molded article of the thermoplastic resin composition according to any one of [1] to [4].

Advantageous Effects of Invention

According to the present invention, it is possible to provide a resin composition and a molded article thereof, which have excellent mechanical properties, color developability, and long-term squeaking sound reducing properties (quietness), in a case where a glycerin fatty acid ester is used in combination with an ethylene/$\alpha$-olefin-based rubber-reinforced resin.

DESCRIPTION OF EMBODIMENTS

In the present specification, "(meth)acryl" denotes acryl and methacryl, "(meth)acrylic acid ester" denotes acrylic acid ester and methacrylic acid ester, and "(co)polymer" denotes a homopolymer and a copolymer.

The term "unit" denotes a structural part derived from a compound (monomer) before polymerization, which is contained in a polymer. For example, the term "acrylonitrile unit" denotes "structural part derived from acrylonitrile", and the term "styrene unit" denotes a "structural part derived from styrene".

The content ratio of each monomer unit of a copolymer corresponds to the blending ratio of each monomer used for producing the copolymer.

The term "to" indicating a numerical range denotes that numerical values described before and after "to" are included as a lower limit and an upper limit.

[Resin Composition]

A resin composition according to a first aspect of the present invention contains a polycarbonate-based resin (A), a rubber-reinforced vinyl-based resin (B), a non-rubber-reinforced vinyl-based resin (C), and a lubricant (D).

The resin composition according to the present aspect may further contain other thermoplastic resins and additives as necessary within a range that does not impair the object of the present invention.

<Polycarbonate-based Resin (A)>

The polycarbonate-based resin (A) is a resin having a carbonate bond in the main chain.

The polycarbonate-based resin (A) is not particularly limited, and examples thereof include an aromatic polycarbonate, an aliphatic polycarbonate, an aliphatic-aromatic polycarbonate, and an aromatic polyester carbonate. Terminals of these polycarbonate-based resins may be modified to an R-CO-group or an R'-O-CO-group (both R and R' represent an organic group). These polycarbonate-based resins can be used alone or in combination of two or more kinds thereof.

At least one selected from the group consisting of an aromatic polycarbonate and an aromatic polyester carbonate is preferable as the polycarbonate-based resin (A) from the viewpoints of the impact resistance and the heat resistance, and an aromatic polycarbonate is more preferable from the viewpoint of the impact resistance.

Examples of the aromatic polycarbonate include a reaction product of a transesterification reaction between an aromatic dihydroxy compound and carbonic acid diester, a polycondensate obtained by an interfacial polycondensation method of an aromatic dihydroxy compound and phosgene, and a polycondensate obtained by a pyridine method of an aromatic dihydroxy compound and phosgene.

The aromatic dihydroxy compound may be a compound containing two hydroxy groups bonded to an aromatic ring in a molecule, and examples thereof include dihydroxybenzene such as hydroquinone or resorcinol, 4,4'-biphenol, 2,2-bis(4-hydroxyphenyl)propane (hereinafter, referred to as "bisphenol A"), 2,2-bis(3,5-dibromo-4-hydroxyphenyl)propane, 2,2-bis(4-hydroxyphenyl-3-methylphenyl)propane, 2,2-bis(3-tert-butyl-4-hydroxyphenyl)propane, 2,2-bis(3,5-dimethyl-4-hydroxyphenyl)propane, bis(4-hydroxyphenyl)methane, 1,1-bis(p-hydroxyphenyl)ethane, 2,2-bis(p-hydroxyphenyl)butane, 2,2-bis(p-hydroxyphenyl)pentane, 1,1-bis(p-hydroxyphenyl)cyclohexane, 1,1-bis(p-hydroxyphenyl)-4-isopropylcyclohexane, 1,1-bis(p-hydroxyphenyl)-3,3,5-trimethylcyclohexane, 1,1-bis(p-hydroxyphenyl)-1-phenylethane, 9,9-bis(p-hydroxyphenyl)fluorene, 9,9-bis(p-hydroxy-3-methylphenyl)fluorene, 4,4'-(p-phenylene diisopropylidene)bisphenol, 4,4'-(m-phenylene diisopropylidene)bisphenol, bis(p-hydroxyphenyl)oxide, bis(p-hydroxyphenyl)ketone, bis(p-hydroxyphenyl)ether, bis(p-hydroxyphenyl)ester, bis(p-hydroxyphenyl)sulfide, bis(p-hydroxy-3-methylphenyl)sulfide, bis(p-hydroxyphenyl)sulfone, bis(3,5-dibromo-4-hydroxyphenyl)sulfone, and bis(p-hydroxyphenyl)sulfoxide. These can be used alone or in combination of two or more kinds thereof.

As the aromatic dihydroxy compound, a compound containing a hydrocarbon group between two benzene rings is preferable. Examples of the hydrocarbon group in the compound include an alkylene group. The hydrocarbon group may be a halogensubstituted hydrocarbon group. The benzene ring may be a benzene ring in which a hydrogen atom of the benzene ring is substituted with a halogen atom.

Examples of the compound containing a hydrocarbon group between two benzene rings include bisphenol A, 2,2-bis(3,5-dibromo-4-hydroxyphenyl)propane, 2,2-bis(4-hydroxyphenyl-3-methylphenyl)propane, 2,2-bis(3-tert-butyl-4-hydroxyphenyl)propane, 2,2-bis(3,5-dimethyl-4-hydroxyphenyl)propane, bis(4-hydroxyphenyl)methane, 1,1-bis(p-hydroxyphenyl)ethane, and 2,2-bis(p-hydroxyphenyl)butane. These can be used alone or in combination of two or more kinds thereof. Among these, bisphenol A is particularly preferable.

Examples of the carbonic acid diester used to obtain the aromatic polycarbonate by a transesterification reaction include dimethyl carbonate, diethyl carbonate, di-tert-butyl carbonate, diphenyl carbonate, and ditolyl carbonate. These can be used alone or in combination of two or more kinds thereof.

The aromatic polyester carbonate is a resin having a carbonate bond and an ester bond in the main chain.

Examples of the aromatic polyester carbonate include poly-4,4'-isopropylidenediphenyl carbonate (for example, a commercially available product sold as "NOVAREX" described below).

The lower limit of the viscosity average molecular weight (Mv) of the polycarbonate-based resin (A) is preferably 15,000 or greater, more preferably 17,000 or greater, and particularly preferably 18,000 or greater. In a case where the Mv is greater than or equal to the above-described lower limits, the impact resistance is more excellent. **In** addition, the upper limit thereof is preferably 40000 or less, more preferably 30000 or less, and particularly preferably 28000 or less. In a case where the Mv is less than or equal to the above-described upper limits, the fluidity and the moldability are more excellent.

The Mv of the polycarbonate-based resin (A) is a value determined by the melt viscosity.

<Rubber-reinforced Vinyl-based Resin (B)>

The rubber-reinforced vinyl-based resin (B) is obtained by polymerizing (graftpolymerizing) a vinyl-based monomer component in the presence of a rubbery polymer, and contains a rubbery polymer and a vinyl-based polymer.

The vinyl-based monomer component consists of one or more kinds of vinyl-based monomers. The vinyl-based polymer is a polymer of a vinyl-based monomer component, and has a vinyl-based monomer-based constitutional unit.

Examples of the rubbery polymer include an ethylene/$\alpha$-olefin-based rubbery polymer, a diene-based rubbery polymer, and an acrylic rubbery polymer. These can be used alone or in combination of two or more kinds thereof.

The rubbery polymer is preferably at least one selected from the group consisting of an ethylene/$\alpha$-olefin-based rubbery polymer and a diene-based rubbery polymer from the viewpoint of the impact resistance and more preferably an ethylene/$\alpha$-olefin-based rubbery polymer from the viewpoint of reducing a squeaking sound in a case where molded articles come into contact with each other.

An ethylene/$\alpha$-olefin-based rubbery polymer and a diene-based rubbery polymer may be used in combination. In this case, the molded article of the resin composition is subjected to ductile fracture even in an environment of an extremely low temperature of, for example, -30°C during impact fracture, and thus the resin composition is suitable as a molding material for a molded article (automobile component or the like) for which safety is required.

The ethylene/$\alpha$-olefin-based rubbery polymer has an ethylene-based constitutional unit and an $\alpha$-olefin-based constitutional unit having 3 or more carbon atoms.

Examples of the $\alpha$-olefin include an $\alpha$-olefin having 3 to 20 carbon atoms, and specific examples thereof include propylene, 1-butene, 1-pentene, 1-hexene, 4-methyl-1-pentene, 1-heptene, 1-octene, 1-decene, 1-dodecene, 1-hexadecene, and 1-eicosene. These $\alpha$-olefins can be used alone or in combination of two or more kinds thereof.

The number of carbon atoms in the $\alpha$-olefin is preferably 3 to 20, more preferably 3 to 12, and still more preferably 3 to 8. In a case where the number of carbon atoms is 20 or less, the copolymerization with ethylene is satisfactory, and the surface appearance of a molded article of the resin composition is more excellent.

The proportion of the ethylene-based constitutional unit in the total mass of the ethylene-based constitutional unit and the $\alpha$-olefin-based constitutional unit having 3 or more carbon atoms is typically 5% to 95% by mass, preferably 50% to 95% by mass, more preferably 60% to 95% by mass, and particularly preferably 70% to 90% by mass. Further, the proportion of the $\alpha$-olefin-based constitutional unit in the total mass thereof is a value obtained by subtracting the proportion of the ethylene-based constitutional unit from the total mass (100% by mass) thereof.

In a case where the proportion of the ethylene-based constitutional unit is in the above-described ranges, the rubber elasticity of the ethylene/$\alpha$-olefin-based rubbery polymer is sufficient, and the impact resistance is more excellent.

The ethylene/$\alpha$-olefin-based rubbery polymer may further have a non-conjugated diene-based constitutional unit as necessary.

Examples of the non-conjugated diene include 1,4-hexadiene, 1,5-hexadiene, 5-ethylidene-2-norbornene, and dicyclopentadiene.

In a case where the ethylene/$\alpha$-olefin-based rubbery polymer further has a non-conjugated diene-based constitutional unit, from the viewpoint of reducing the squeaking sound, the proportion of the non-conjugated diene-based constitutional unit in the total mass (100% by mass) of the ethylene-based constitutional unit and the $\alpha$-olefin-based constitutional unit is preferably 0% to 10% by mass, more preferably 1% to 9% by mass, still more preferably 2% to 8% by mass or less, and particularly preferably 3% to 7% by mass.

As the ethylene/$\alpha$-olefin-based rubbery polymer, an ethylene/propylene copolymer, an ethylene/1-butene copolymer, or an ethylene/1-octene copolymer is preferable, and an ethylene/propylene copolymer is more preferable.

The ethylene/$\alpha$-olefin-based rubbery polymer can be used alone or in combination of two or more kinds thereof.

The Mooney viscosity (ML1+4) of the ethylene/$\alpha$-olefin-based rubbery polymer (may have a non-conjugated diene-based constitutional unit) at 100°C is typically 5 to 80, preferably 10 to 65, and more preferably 10 to 45. In a case where the Mooney viscosity is in the above-described ranges, the fluidity of the rubber-modified graft polymer (B) is further enhanced, and the moldability is more excellent.

The Mooney viscosity is a value measured in conformity with a method specified in JIS K 6300.

From the viewpoint of reducing the squeaking sound, it is preferable that the ethylene/$\alpha$-olefin-based rubbery polymer has a melting point (Tm).

The expression "ethylene/$\alpha$-olefin-based rubbery polymer has a Tm" denotes that the rubbery polymer has a crystalline part. It is considered that in a case where a crystalline part is present in the rubbery polymer, occurrence of a stick slip phenomenon is suppressed, and thus the occurrence of the squeaking sound is suppressed.

The Tm of the ethylene/$\alpha$-olefin-based rubbery polymer (may have a non-conjugated diene-based constitutional unit) is preferably 0°C to 120°C, more preferably 10°C to 100°C, and particularly preferably 20°C to 80°C. In a case where the Tm thereof is 0°C or higher, the squeaking sound reduction effect is more excellent.

The Tm is a value obtained by measuring an endothermic change at a constant temperature-increasing rate of 20°C per minute using a differential scanning calorimeter (DSC) and reading the peak temperature of the obtained endothermic pattern, and the details thereof are specified in JIS K 7121:1987. Further, in the measurement using a DSC, in a case where the peak of an endothermic change is not clearly shown, it is determined that the polymer does not substantially have crystallinity and does not have a Tm.

The glass transition temperature (Tg) of the ethylene/$\alpha$-olefin-based rubbery polymer (may have a non-conjugated diene-based constitutional unit) is preferably -20°C or lower, more preferably -30°C or lower, and particularly preferably -40°C or lower. In a case where the Tg thereof is -20°C or lower, the impact resistance of a molded article of the resin composition is more excellent.

The Tg can be measured in conformity with the method specified in JIS K 7121:1987 using a DSC in the same manner as in the measurement of Tm.

The weight-average molecular weight of the ethylene/$\alpha$-olefin-based rubbery polymer is typically 50,000 to 1,000,000, preferably 80,000 to 800,000, and more preferably 80,000 to 500,000. In a case where the weight-average molecular weight thereof is in the above-described ranges, the fluidity and the moldability of the resin composition, and the impact resistance and the appearance of a molded article of the resin composition are more excellent.

The weight-average molecular weight is a value in terms of standard polystyrene measured by gel permeation chromatography (GPC).

Examples of the diene-based rubbery polymer include homopolymers such as polybutadiene and polyisoprene, butadiene-based copolymers such as a styrene/butadiene copolymer, a styrene/butadiene/styrene copolymer, an acrylonitrile/styrene/butadiene copolymer, and an acrylonitrile/butadiene copolymer, and isoprene-based copolymers such as a styrene/isoprene copolymer, a styrene/isoprene/styrene copolymer, and an acrylonitrile/styrene/isoprene copolymer. These may be a random copolymer or a block copolymer.

The diene-based rubbery polymer may be a crosslinked polymer or a non-crosslinked polymer.

The diene-based rubbery polymer may be a (co)polymer obtained by hydrogenating a (co)polymer having a unit formed of a conjugated diene-based compound. The hydrogenation rate with respect to the diene-based rubbery polymer is typically 95% or greater and preferably 98% or greater.

The diene-based rubbery polymer can be used alone or in combination of two or more kinds thereof.

Further, the diene-based rubbery polymer does not have an $\alpha$-olefin-based constitutional unit.

In a case where the rubbery polymer is an ethylene/α-olefin-based rubbery polymer, the proportion of the rubbery polymer in the total mass of the rubbery polymer and the vinyl-based polymer (the total mass of the rubbery polymer and the vinyl-based monomer component) is preferably 10% to 60% by mass, more preferably 15% to 40% by mass, and still more preferably 20% to 30% by mass. Meanwhile, in a case where the rubbery polymer is a diene-based rubbery polymer, the proportion thereof is preferably 40% to 75% by mass, more preferably 50% to 70% by mass, and still more preferably 55% to 65% by mass.

(Vinyl-based Monomer Component)

Examples of the vinyl-based monomer constituting the vinyl-based monomer component include an aromatic vinyl compound, a vinyl cyanide compound, a (meth)acrylic acid ester, and other vinyl-based monomers that can be copolymerized with these compounds. Examples of other vinyl-based monomers include a maleimide-based compound, an unsaturated acid anhydride, a carboxy group-containing unsaturated compound, a hydroxy group-containing unsaturated compound, an oxazoline group-containing unsaturated compound, and an epoxy group-containing unsaturated compound. These can be used alone or in combination of two or more kinds thereof.

Specific examples of the aromatic vinyl compound include styrene, α-methylstyrene, o-methylstyrene, p-methylstyrene, β-methylstyrene, ethylstyrene, p-tert-butylstyrene, vinyltoluene, vinylxylene, and vinylnaphthalene. These compounds can be used alone or in combination of two or more kinds thereof. Among these, styrene and α-methylstyrene are preferable, and styrene is particularly preferable.

Specific examples of the vinyl cyanide compound include acrylonitrile, methacrylonitrile, ethacrylonitrile, α-ethyl acrylonitrile, and α-isopropyl acrylonitrile. These compounds can be used alone or in combination of two or more kinds thereof. Among these, acrylonitrile is preferable.

Specific examples of the (meth)acrylic acid ester include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, hexyl (meth)acrylate, n-octyl (meth)acrylate, 2-ethylhexyl (meth)acrylate, cyclohexyl (meth)acrylate, phenyl (meth)acrylate, and benzyl (meth)acrylate. These compounds can be used alone or in combination of two or more kinds thereof. Among these, methyl methacrylate is preferable.

Specific examples of the maleimide-based compound include N-phenylmaleimide and N-cyclohexylmaleimide. These compounds can be used alone or in combination of two or more kinds thereof.

Specific examples of the unsaturated acid anhydride include maleic anhydride, itaconic anhydride, and citraconic anhydride. These compounds can be used alone or in combination of two or more kinds thereof.

Specific examples of the carboxy group-containing unsaturated compound include (meth)acrylic acid, ethacrylic acid, maleic acid, fumaric acid, itaconic acid, crotonic acid, and cinnamic acid. These compounds can be used alone or in combination of two or more kinds thereof.

Specific examples of the hydroxy group-containing unsaturated compound include 3-hydroxy-1-propene, 4-hydroxy-1-butene, cis-4-hydroxy-2-butene, trans-4-hydroxy-2-butene, 3-hydroxy-2-methyl-1-propene, 2-hydroxyethyl (meth)acrylate, 2-hydroxypropyl (meth)acrylate, and 3-hydroxypropyl (meth)acrylate. These compounds can be used alone or in combination of two or more kinds thereof.

From the viewpoint of the compatibility between the rubber-modified graft polymer (B) and other resins, it is preferable that the vinyl-based monomer component contains an aromatic vinyl compound.

From the viewpoint of the compatibility, the proportion of the aromatic vinyl compound in the total mass of the vinyl-based monomer component is preferably 40% by mass or greater, more preferably 50% by mass or greater, still more preferably 60% by mass or greater, and particularly preferably 70% by mass or greater. The proportion thereof may be 100% by mass, and is preferably 90% by mass or less, more preferably 85% by mass or less, and still more preferably 80% by mass or less.

From the viewpoint of the compatibility between the rubber-modified graft polymer (B) and other resins, the vinyl-based monomer component contains preferably at least one selected from the group consisting of a vinyl cyanide compound and a (meth)acrylic acid ester and more preferably a vinyl cyanide compound, in addition to the aromatic vinyl compound. In a case where the vinyl-based monomer component contains an aromatic vinyl compound and a vinyl cyanide compound, the chemical resistance, the toughness, and the like of a molded article of the resin composition are more excellent.

In a case where the vinyl-based monomer component contains an aromatic vinyl compound and a vinyl cyanide compound, from the viewpoint of the compatibility, the proportion of the aromatic vinyl compound in the total mass of the vinyl-based monomer component is preferably 40% to 90% by mass, more preferably 55% to 85% by mass, and still more preferably 65% to 80% by mass. **In** addition, the proportion of the vinyl cyanide compound in the total mass of the vinyl-based monomer component is preferably 10% to 60% by mass, more preferably 15% to 45% by mass, and still more preferably 20% to 35% by mass.

Further, the proportion of the aromatic vinyl compound in the total mass of the vinyl-based monomer component can be regarded as the proportion of an aromatic vinyl compound-based constitutional unit in the total mass of all constitutional units constituting the vinyl-based polymer. The same applies to the proportion of the vinyl cyanide compound.

(Method of Producing Rubber-reinforced Vinyl-based Resin (B))

The rubber-reinforced vinyl-based resin (B) is obtained by polymerizing a vinyl-based monomer component in the presence of a rubbery polymer.

The polymerization method is not particularly limited, and examples thereof include an emulsion polymerization method, a solution polymerization method, a bulk polymerization method, and a suspension polymerization method.

Examples of a method of obtaining the rubber-reinforced vinyl-based resin (B) by an emulsion polymerization method include a method of polymerizing the vinyl-based monomer component in the presence of a latex of a rubbery polymer. In this manner, a latex of the rubber-reinforced vinyl-based resin (B) is obtained.

The latex of the rubbery polymer can be produced by a known method. As a method of producing the latex, a method of performing a homogenizing treatment (homogenizing) on a rubbery polymer in a molten state in water by a stirring shearing force or a method of emulsifying and polymerizing polymerizable monomers in the presence of an emulsifier is known (see Japanese Examined Patent Application, Second Publication No. H4-30970B, Japanese Patent No. 3403828, Japanese Unexamined Patent Application, First Publication No. H11-269206, and the like).

The total amount of the vinyl-based monomer component may be collectively added to the latex of the rubbery polymer for polymerization, or may be continuously added by being divided in small amounts for polymerization. **In** addition, the polymerization may be carried out by a method of combining these. Further, the total amount or a part of the latex of the rubbery polymer may be added in the middle of the polymerization and polymerized. A polymerization initiator, a chain transfer agent (molecular weight adjuster), an emulsifier, or the like can be used for the polymerization.

Examples of the polymerization initiator include a redox-based initiator in which an organic peroxide such as cumene hydroperoxide, diisopropylbenzene hydroperoxide, or paramentane hydroperoxide is combined with a reducing agent such as sugar-containing pyrophosphoric acid or sulfoxylate, a persulfate such as potassium persulfate, and a peroxide such as benzoyl peroxide (BPO), azobisisobutyronitrile, lauroyl peroxide, tert-butyl peroxy laurate, or tert-butyl peroxymonocarbonate. The polymerization initiator may be oil-soluble or water-soluble, or a combination thereof. The polymerization initiator can be used alone or in combination of two or more kinds thereof. The polymerization initiator can be added to the latex of the rubbery polymer in a lump or continuously.

The amount of the polymerization initiator to be used is preferably 0.1 to 1.5 parts by mass and more preferably 0.2 to 0.7 parts by mass with respect to 100 parts by mass of the total amount of the monomer components.

Examples of the chain transfer agent include mercaptans such as octyl mercaptan, n-dodecyl mercaptan, t-dodecyl mercaptan, n-hexamethyl mercaptan, n-tetradecyl mercaptan, and t-tetradecyl mercaptan, terpinolenes, and dimers of $\alpha$-methylstyrene. The chain transfer agent can be used alone or in combination of two or more kinds thereof. The chain transfer agent can be added to the latex of the rubbery polymer collectively or continuously.

The amount of the chain transfer agent to be used is preferably 5 parts by mass or less and more preferably 3 parts by mass with respect to 100 parts by mass of the total amount of the monomer component.

Examples of the emulsifier include an anionic surfactant and a nonionic surfactant. Examples of the anionic surfactant include sulfuric acid ester of a higher alcohol, an alkylbenzene sulfonate such as dodecylbenzene sulfonic acid, an aliphatic sulfonate such as sodium lauryl sulfate, and an aliphatic phosphate. Examples of the nonionic surfactant include an alkyl ester type compound of polyethylene glycol and an alkyl ether compound. The emulsifier can be used alone or in combination of two or more kinds thereof. The amount of the emulsifier ot be used is, for example, 0.3 to 5 parts by mass with respect to 100 parts by mass of the total amount of the monomer component.

The emulsion polymerization can be carried out under known conditions depending on the kinds of the vinyl-based monomer, the polymerization initiator, and the like. A method of recovering the rubber-reinforced vinyl-based resin (B) from the latex obtained by emulsion polymerization is not particularly limited, and examples thereof include a method of putting the latex into a coagulant aqueous solution to coagulate the latex and recovering a polymer, a method of putting a coagulant aqueous solution to the latex to coagulate the latex and recovering a polymer, a method of coagulating the latex by performing the coagulation step in two or more stages with a temperature gradient from a low temperature to a high temperature and recovering a polymer, a method of coagulating the latex by performing the coagulation step in two or more stages with an acidity gradient from weak acidity to strong acidity or from strong acidity to weak acidity and recovering a polymer, and a method of mixing the latex with a coagulant aqueous solution to form a paste, extruding the paste from a pore into warm water to coagulate the latex, and recovering a polymer. The rubber-reinforced vinyl-based resin (B) can also be recovered by selecting and combining two or more of the above-described methods. As the coagulant, for example, one or more selected from an inorganic acid such as sulfuric acid, phosphoric acid, or nitric acid, an organic acid such as acetic acid or lactic acid, or an inorganic salt such as magnesium sulfate, calcium chloride, magnesium chloride, or sodium chloride can be used.

Thereafter, the polymer can be recovered by performing dewatering and drying with, for example, a centrifugal dewatering machine or a fluidized dryer using a known method. Further, in this case, various antioxidants and various stabilizers may be added to the latex in advance as necessary, and these may be further emulsified and added.

The graft ratio of the rubber-reinforced vinyl-based resin (B) is typically 10% to 50% by mass, preferably 15% to 120% by mass, more preferably 20% to 100% by mass, and particularly preferably 30% to 80% by mass. In a case where the graft ratio is in the above-described ranges, the impact resistance and the moldability of the resin composition are more excellent.

The graft ratio can be determined by Mathematical Formula (1).

$$\text{Graft ratio (\% by mass)} = \{(S - T)/T\} \times 100 \cdots (1)$$

In the formula, S represents the mass (g) of insoluble matter obtained by putting 1 g of the rubber-modified graft polymer (B) into 20 mL of acetone, shaking the mixture with a shaker for 2 hours under a temperature condition of 25°C, and centrifuging the mixture with a centrifuge (rotation speed: 23000 ppm) for 60 minutes under a temperature condition of 5°C to separate the insoluble matter and the soluble matter from each other, and T represents the mass (g) of a rubbery polymer contained in 1 g of the rubber-reinforced vinyl-based resin (B). The mass of the rubbery polymer can be obtained by a method of calculating the mass from the polymerization formulation and the polymerization conversion rate or a method of calculating the mass by an infrared absorption spectrum (IR), thermal decomposition gas chromatography, CHN elemental analysis, or the like.

The graft ratio can be adjusted, for example, by appropriately selecting the kind and amount of the chain transfer agent used in the polymerization of the monomer component, the kind and amount of the polymerization initiator, the amount of the monomer component added during the polymerization, the method and time of addition, the polymerization temperature, and the like.

The limiting viscosity [η] (in methyl ethyl ketone, 30°C) of the acetone-soluble matter of the rubber-reinforced vinyl-based resin (B) is typically 0.1 to 1.5 dL/g, preferably 0.20 to 1.0 dL/g, and more preferably 0.30 to 0.70 dL/g.

In a case where the limiting viscosity [η] is in the above-described range, the impact resistance and the moldability are more excellent.

The above-described limiting viscosity [η] can be measured by the following method.

First, the acetone-soluble matter of the rubber-reinforced vinyl-based resin (B) is dissolved in methyl ethyl ketone to prepare five measurement samples having different concentrations. Next, the limiting viscosity [η] is determined from the results of measuring the reduced viscosities of the measurement samples having each concentration at 30°C using an Ubbelohde viscometer. The limiting viscosity is in units of dL/g. The acetone-soluble matter is obtained by putting 1 g of the rubber-modified graft polymer (B) to 20 mL of acetone, shaking the mixture with a shaker for 2 hours under a temperature condition of 25°C, centrifuging the mixture with a centrifuge (rotation speed: 23,000 ppm) for 60 minutes under a temperature condition of 5°C to separate insoluble matter and soluble matter (acetone solution of acetone-soluble matter) from each other, and drying the soluble matter (removing acetone).

The above-described limiting viscosity [η] can be adjusted, for example, by appropriately selecting the kind and amount of the chain transfer agent to be used during the polymerization of the monomer component, the kind and amount of the polymerization initiator, the method and time of adding the monomer component during the polymerization, the polymerization temperature, the polymerization time, and the like. In addition, the limiting viscosity [η] can also be adjusted by appropriately selecting and mixing two or more kinds of rubber-reinforced vinyl-based resins (B) having different limiting viscosities [η].

<Non-rubber-reinforced Vinyl-based Resin (C)>

The non-rubber-reinforced vinyl-based resin (C) is a copolymer having at least an acrylonitrile unit and a styrene unit, and is a copolymer obtained by copolymerizing a monomer mixture (c1) containing acrylonitrile and styrene in the absence of a rubbery polymer. The monomer mixture (c1) may contain a monomer other than acrylonitrile and styrene (hereinafter, also referred to as "other monomers") as necessary. That is, the non-rubber-reinforced vinyl-based resin (C) is a copolymer having an acrylonitrile unit, a styrene unit, and, as necessary, other monomer units.

Examples of other monomers which may be contained in the monomer mixture (c1) include the vinyl-based monomers described in the section of the rubber-reinforced vinyl-based resin (B) above.

In the proportion of each monomer in the monomer mixture (c1), the content of the acrylonitrile unit is preferably 10% to 45% by mass, more preferably 15% to 40% by mass, and still more preferably 20% to 35% by mass, and the content of the styrene unit is preferably 55% to 90% by mass, more preferably 60% to 85% by mass, and still more preferably 65% to 80% by mass with respect to the total mass of the monomer mixture (c1).

In addition, the proportion of the other monomers is preferably 0% to 30% by mass, more preferably 0% to 20% by mass, still more preferably 0% to 10% by mass, and most preferably 0% by mass with respect to the total mass of the monomer mixture (c1).

The limiting viscosity [η] (in methyl ethyl ketone, 30°C) of the acetone-soluble matter of the non-rubber-reinforced vinyl-based resin (C) is, for example, preferably 0.10 to 1.2 dL/g, more preferably 0.30 to 0.9 dL/g, and still more preferably 0.40 to 0.70 dL/g. In a case where the limiting viscosity [η] is in the above-described range, the impact resistance and the moldability are more excellent.

The above-described limiting viscosity [η] can be measured by the same method as that for the limiting viscosity [η] of the rubber-reinforced vinyl-based resin (B) described above.

The non-rubber-reinforced vinyl-based resin (C) can be produced by copolymerizing acetonitrile, styrene, and other monomers as necessary.

As a method of polymerizing each monomer, any known polymerization method such as emulsion polymerization, suspension polymerization, bulk polymerization, or a method in which these methods are combined can be employed.

The non-rubber-reinforced vinyl-based resin (C) may be used alone or in the form of a mixture of two or more kinds of non-rubber-reinforced vinyl-based resins (C) having different monomer compositions, molecular weights, and the like.

<Lubricant (D)>

The lubricant (D) is a lubricant having a saturated fatty acid ester in which a saturated fatty acid having 12 (C12) or more carbon atoms and an alcohol are ester-bonded. The saturated fatty acid ester may be obtained by hydrogenating an unsaturated fatty acid ester.

The lubricant (D) may be a wax-like mixture that contains a saturated fatty acid ester as a main component (50% by mass or more with respect to the total mass of the lubricant (D)) and further contains other components as sub-components.

Specific examples of the saturated fatty acid having 12 or more carbon atoms include lauric acid, myristic acid, palmitic acid, stearic acid, 12-hydroxystearic acid, arachidic acid, hardened beef tallow oil, and palm oil.

Examples of the fatty acid ester include a glycerin fatty acid ester in which a fatty acid is ester-bonded to one or more of three hydroxy groups containing glycerin. Examples of the glycerin fatty acid ester include monoacylglycerol having one fatty acid, diacylglycerol having two or more fatty acids, and triacylglycerol having three or more fatty acids.

Specific examples of the saturated fatty acid ester having 12 or more carbon atoms include glyceryl monostearate, which is a monoacylglycerol, and a hydrogenated product of castor oil, which is a triacylglycerol.

From the viewpoint of bleeding out from the molded article or long-term stability of physical properties, the melting point of the lubricant (D) is preferably higher than or equal to room temperature, more preferably higher than or equal to 50°C, and still more preferably higher than or equal to 80°C.

From the viewpoint of color developability, a saturated fatty acid or a saturated fatty acid ester is preferable as the lubricant (D).

As the lubricant (D), from the viewpoint of reducing the squeaking sound, a saturated fatty acid ester is preferable to a saturated fatty acid. Among the saturated fatty acid esters, triacylglycerol having a lower emulsifying action is preferable to monoacylglycerol or diacylglycerol.

The lubricant (D) can be used alone or in combination of two or more kinds thereof. As the lubricant (D), a commercially available product can be used. Examples of the commercially available product include hydrogenated castor oil.

<Other Thermoplastic Resins>

Examples of other thermoplastic resins in addition to the above-described components (A) to (D) include a polyethylene terephthalate (PET) resin, a polyester resin such as a polybutylene terephthalate (PBT) resin, and a polyurethane (PU) resin. These thermoplastic resins can be used alone or in combination of two or more kinds thereof.

<Other Additives>

The resin composition according to the present aspect may contain other additives. Examples of the other additives include an ultraviolet absorbing agent, a weatherproofing agent, a filler, an antioxidant, an anti-aging agent, an antistatic agent, a flame retardant, an anti-fogging agent, a lubricant, an antibacterial agent, a viscosity imparting agent, a plasticizer, and a colorant. These additives can be used alone or in combination of two or more kinds thereof.

<Content Ratio>

**In** the resin composition of the present aspect, the total content of the polycarbonate-based resin (A), the rubber-reinforced vinyl-based resin (B), the non-rubber-reinforced vinyl-based resin (C), and the lubricant (D) is, for example, preferably 50% to 100% by mass, more preferably 60% to 99% by mass, still more preferably 70% to 98% by mass, particularly preferably 80% to 98% by mass, and most preferably 90% to 98% by mass with respect to the total mass of the resin composition.

In a case where the total content thereof is greater than or equal to the lower limits of the above-described ranges, the effects of the present invention are sufficiently exhibited. In a case where the total content thereof is less than or equal to the upper limits of the above-described ranges, the resin composition can contain other components (for example, a pigment) in addition to the components (A) to (D).

In the resin composition of the present aspect, the blending ratio of the components (A) to (D) can be appropriately selected according to required impact resistance, heat resistance, mechanical strength, moldability, and the like.

The lower limit of the proportion of the polycarbonate-based resin (A) with respect to the total mass of the polycarbonate-based resin (A), the rubber-reinforced vinyl-based resin (B), and the non-rubber-reinforced vinyl-based resin (C) is preferably 30% by mass or greater and more preferably 40% by mass or greater. In addition, the upper limit thereof is preferably 70% by mass or less and more preferably 60% by mass or less. In a case where the proportion of the polycarbonate-based resin (A) is greater than or equal to the above-described lower limits, the impact resistance and the heat resistance are more excellent. In a case where the proportion of the polycarbonate-based resin (A) is less than or equal to the above-described upper limits, the mechanical strength and the moldability are more excellent.

The lower limit of the total content of the rubber-reinforced vinyl-based resin (B) is preferably 3% by mass or greater and more preferably 5% by mass or greater with respect to the total mass of the polycarbonate-based resin (A), the rubber-reinforced vinyl-based resin (B), and the non-rubber-reinforced vinyl-based resin (C). In addition, the upper limit thereof is preferably 16% by mass or less, more preferably 14% by mass or less, and still more preferably 9% by mass or less. In a case where the total content of the rubber-reinforced vinyl-based resin (B) is greater than or equal to the above-described lower limits, the impact resistance and the squeaking sound reducing property are more excellent. In a case where the content of the rubber-reinforced vinyl-based resin (B) is less than or equal to the above-described upper limits, the color developability is more excellent.

The lower limit of the content of the ethylene/$\alpha$-olefin-based rubber-reinforced resin (B1) is preferably 3% by mass or greater and more preferably 5% by mass or greater with respect to the total mass of the polycarbonate-based resin (A), the rubber-reinforced vinyl-based resin (B), and the non-rubber-reinforced vinyl-based resin (C). In addition, the upper limit thereof is preferably 16% by mass or less, more preferably 14% by mass or less, and still more preferably 9% by mass or less. In a case where the content of the ethylene/$\alpha$-olefin-based rubber-reinforced resin (B1) is greater than or equal to the above-described lower limits, the impact resistance and the squeaking sound reducing property are more excellent. In a case where the content of the rubber-reinforced vinyl-based resin (B) is less than or equal to the above-described upper limits, the color developability is more excellent.

The lower limit of the content of the diene-based rubber-reinforced resin (B2) is preferably 1% by mass or greater, more preferably 2% by mass or greater, and still more preferably 3% by mass or greater with respect to the total mass of the polycarbonate-based resin (A), the rubber-reinforced vinyl-based resin (B), and the non-rubber-reinforced vinyl-based resin (C). In addition, the upper limit thereof is preferably 10% by mass or less, more preferably 7% by mass or less, and still more preferably 5% by mass or less. In a case where the content of the diene-based rubber-reinforced resin (B2) is greater than or equal to the above-described lower limits, the impact resistance is more excellent. In a case where the content of the diene-based rubber-reinforced resin (B2) is less than or equal to the above-described upper limits, the squeaking sound reducing property and the color developability are more excellent.

The lower limit of the content of the non-rubber-reinforced vinyl-based resin (C) is preferably 20% by mass or greater, more preferably 30% by mass or greater, and still more preferably 41% by mass or greater with respect to the total mass of the polycarbonate-based resin (A), the rubber-reinforced vinyl-based resin (B), and the non-rubber-reinforced vinyl-based resin (C). In addition, the upper limit thereof is preferably 60% by mass or less and more preferably 50% by mass or less. In a case where the content of the non-rubber-reinforced vinyl-based resin (C) is greater than or equal to the above-described lower limits, the impact resistance and the squeaking sound reducing property are more excellent. In a case where the content of the non-rubber-reinforced vinyl-based resin (C) is less than or equal to the above-described upper limits, the color developability and glossiness are more excellent.

The lower limit of the content of the lubricant (D) is preferably 1% by mass or greater and more preferably 2% by mass or greater with respect to the total mass (100% by mass) of the polycarbonate-based resin (A), the rubber-reinforced vinyl-based resin (B), and the non-rubber-reinforced vinyl-based resin (C). In addition, the upper limit thereof is preferably 8% by mass or less, more preferably 6% by mass or less, and still more preferably 4% by mass or less. In a case where the content of the lubricant (D) is greater than or equal to the above-described lower limits, the color developability and the squeaking sound reducing property are more excellent. In a case where the content of the lubricant (D) is less than or equal to the above-described upper limits, the impact resistance, the heat resistance, and the like are more excellent.

From the viewpoint of the impact resistance, the content of the other thermoplastic resins is preferably 30% by mass or less, more preferably 20% by mass or less, still more preferably 10% by mass or less, and most preferably 5% by mass or less with respect to the total mass of the polycarbonate-based resin (A), the rubber-reinforced vinyl-based resin (B), and the non-rubber-reinforced vinyl-based resin (C). The lower limit of the content of the other thermoplastic resins is not particularly limited, and may be 0% by mass.

The content of the other additives is, for example, preferably 0% to 5% by mass and more preferably 0% to 2% by mass with respect to the total mass (100% by mass) of the polycarbonate-based resin (A), the rubber-reinforced vinyl-based resin (B), and the non-rubber-reinforced vinyl-based resin (C).

The melt mass flow rate (MFR) of the resin composition at a temperature of 240°C and a load of 98 N is preferably 20 to 80 g/10 min, more preferably 35 to 65 g/10 min, and still more preferably 40 to 55 g/10 min. In a case where the MFR is greater than or equal to the above-described lower limits, the fluidity and the moldability are more excellent. In a case where the MFR is less than or equal to the above-described upper limits, the impact resistance is more excellent.

The MFR is a value measured in conformity with the method specified in ISO 1133.

The resin composition according to the present aspect can be produced, for example, by mixing the polycarbonate-based resin (A), the rubber-reinforced vinyl-based resin (B), the non-rubber-reinforced vinyl-based resin (C), the lubricant (D), and as necessary, other thermoplastic resins and other additives using a mixer such as a tumbler mixer or a Henschel mixer, and melt-kneading the mixture under appropriate conditions using a kneader such as a single screw extruder, a twin screw extruder, a Banbury mixer, a kneader, a roll, or a feeder ruder. The mixture can be kneaded with a Banbury mixer, a kneader, or the like, and pelletized with an extruder.

The mixing order of each of the components is not particularly limited, and some of the components are mixed and the remaining components may be mixed, or all the components may be mixed at once. In a case where each component is kneaded, the components may be kneaded collectively or in multiple stages or may be dividedly kneaded.

It is preferable that a fibrous filler is supplied from the middle of an extruder using a side feeder in order to prevent the fibrous filler from being cut during kneading. The melt-kneading temperature is usually 200°C to 300°C and preferably 220°C to 280°C.

Since the resin composition of the present invention described above contains the polycarbonate-based resin (A), the rubber-reinforced vinyl-based resin (B), the non-rubber-reinforced vinyl-based resin (C), and the lubricant (D), the resin composition has excellent color developability and an excellent squeaking sound reducing property. In addition, since the ethylene/α-olefin-based rubber-reinforced resin is used as the rubber-reinforced vinyl-based resin (B), the long-term squeaking sound reducing property and the mechanical properties are excellent.

[Molded Article]

A molded article according to a second aspect of the present invention contains the resin composition according to the first aspect.

The molded article of the present aspect can be produced, for example, by molding the resin composition of the first aspect.

A molding method is not particularly limited, and examples thereof include known methods such as an injection molding method, an injection compression molding method, a gas assist molding method, a press molding method, a blow molding method, a profile extrusion molding method, a calendar molding method, and a T-die extrusion molding method.

The molded article of the present invention is suitable, for example, as an electric or electronic device, an optical device, a lighting device, office equipment, an automobile component, an office equipment component, a housing component, or a home appliance component.

Examples

Hereinafter, the present invention will be described in more detail with reference to examples. However, the present invention is not limited to the following examples.

Further, "%" and "parts" in the following examples are on a mass basis unless otherwise specified.

[Measuring Method]

<MFR>

The MFR of the pellets of the resin composition was measured under conditions of a temperature of 240°C and a load of 98 N in conformity with the method specified in ISO 1133.

<Charpy Impact Strength (IMP)>

The pellets of the resin composition were injection-molded using an injection molding machine ("J110AD-180H" manufactured by The Japan Steel Works, Ltd.) under a cylinder temperature condition of 240°C, thereby obtaining a test piece.

The IMP of the obtained test piece was measured at 23°C in conformity with the method specified in ISO 179-1. It was determined that the impact resistance was excellent as the IMP increased, and the impact resistance was satisfactory in a case where IMP $\geq$ 15 kJ/m$^2$ was satisfied.

<Heat Resistance (HDT)>

A test piece having a length of 80 mm, a width of 10 mm, and a thickness of 4 mm was prepared from a pellet-like thermoplastic resin composition under conditions of a cylinder set temperature of 260°C and a mold temperature of 30°C using an injection molding machine ("IS55FP-1.5A", manufactured by Toshiba Machine Co., Ltd.).

The load deflection temperature (HDT) of the obtained test piece was measured at a load of 1.83 MPa under a flatwise condition (thickness of 4 mm) using an HDT tester ("6A-2", manufactured by TOYO SEKI CO., LTD.) in conformity with ISO 75. It was determined that the heat resistance was excellent as the HDT increased, and the heat resistance was satisfactory in a case where HDT $\geq$ 90°C was satisfied.

<Color Developability>

The pellets of each thermoplastic resin composition were injection-molded under conditions of a cylinder temperature of 240°C, a mold temperature of 60°C, and an injection rate of 20 g/sec, thereby obtaining a plate-shaped molded article having a length of 100 mm, a width of 100 mm, and a thickness of 3 mm.

(Brightness L*)

The brightness L* of the molded article was measured by an SCE method using a spectrophotometer ("CM-3500d" manufactured by Konica Minolta Advanced Optics Co., Ltd.) The measured L* is defined as "L* (ma)". It was determined that the color is closer to black as the L* decreases, the color developability was satisfactory in a case where L* $\leq$ 9.0 was satisfied.

The term "brightness L*" denotes a value (L*) of brightness among the color values in the L*a*b* color system employed in JIS Z 8729.

The term "SCE method" denotes a method of measuring a color by removing specularly reflected light by optical trapping using a spectrophotometer in conformity with JIS Z 8722.

(Surface Gloss)

The reflectivity (%) of the surface of the molded article at an incidence angle of 60° and a reflection angle of 60° was measured in conformity with JIS K 7105 using "Digital Variable Angle Gloss Meter UGV-5D" (manufactured by Suga Test Instruments Co., Ltd.). It was determined that the surface appearance was excellent as the reflectivity increased, and the color developability was satisfactory in a case where gloss $\geq$ 100% was satisfied.

<Squeaking Sound Prevention Property>

Each thermoplastic resin composition was injection-molded with an IS-170FA injection molding machine (manufactured by Toshiba Machine Co., Ltd.) at a cylinder temperature of 250°C, an injection pressure of 50 MPa, and a mold temperature of 60°C, thereby obtaining an injection-molded plate having a length of 150 mm, a width of 100 mm, and a thickness of 4 mm. A test piece having a length of 60 mm, a width of 100 mm, and a thickness of 4 mm and a test piece having a length of 50 mm, a width of 25 mm, and a thickness of 4 mm were cut out from the plate with a disc saw. The end portions of these two sheets of large and small plates were chamfered with #100 sandpaper, fine burrs were removed with a cutter knife, and the resultants were used as test pieces.

The two sheets of test pieces were aged for 300 hours in an oven adjusted to 80°C $\pm$ 5°C and cooled to 25°C for 24 hours, the large test piece and the small test piece were fixed to a stick-slip tester SSP-02 (manufactured by ZIEGLER), and an abnormal sound risk value in a case where rubbing was performed three times with an amplitude of 20 mm under four combined conditions of a load of 5 N or 40 N and a speed of 1 mm/sec or 10 mm/sec was measured in an atmosphere of a temperature of 23°C and a humidity of 50 %RH. Further, the largest abnormal sound risk value was employed as the measured value. The risk of occurrence of the squeaking sound increases as the abnormal sound risk value increases, and the risk of occurrence of the squeaking sound is satisfactory in a case where the abnormal sound risk value is 3 or less.

In the present test, since aging is performed for 300 hours under the above-described conditions, a low abnormal sound risk value denotes that the squeaking sound reduction effect is stably exhibited for a long period of time.

[Material Used]

<Polycarbonate Resin (A)>

"NOVAREX 7022PJ-LH1" (aromatic polycarbonate with Mv of 18,700 (catalog value), manufactured by Mitsubishi Engineering-Plastics Corporation) was used.

<Ethylene/$\alpha$-olefin-based Rubber-reinforced Resin (B1)>

A stainless steel autoclave having a volume of 20 L, equipped with a ribbon type stirrer blade, an auxiliary agent continuous addition device, a thermometer, and the like was charged with 22 parts of an ethylene/propylene/dicyclopentadiene copolymer (ethylene/propylene/dicyclopentadiene = 75/20/5 (%), Mooney viscosity (ML1 + 4, 100°C) 20, melting point (Tm) of 40°C, glass transition temperature (Tg) of -50°C) as an ethylene/$\alpha$-olefin-based rubbery polymer, 55 parts of styrene, 23 parts of acrylonitrile, 0.5 parts of t-dodecyl mercaptan, and 110 parts of toluene, the internal temperature was increased to 75°C, and the contents of the autoclave were stirred for 1 hour to obtain a uniform solution. Thereafter, 0.45 parts of t-butyl peroxyisopropyl monocarbonate was added thereto, the internal temperature was further increased, and after the temperature reached 100°C, a polymerization reaction was carried out at a stirring rotation speed of 100 rpm while the temperature was maintained. The internal temperature was increased to 120°C after 4 hours from the start of the polymerization reaction, and the reaction was further carried out for 2 hours while the temperature was maintained to complete the polymerization reaction. Thereafter, the internal temperature was lowered to 100°C, 0.2 parts of octadecyl-3-(3,5-di-t-butyl-4-hydroxyphenol)-propionate and 0.02 parts of dimethyl silicone oil; KF-96-100 cSt (trade name, manufactured by Shin-Etsu Chemical Co., Ltd.) were added thereto, the reaction mixture was extracted from the autoclave, the unreacted material and the solvent were distilled off by steam distillation, and the volatile matter was substantially degassed using a 40 mm$\varphi$ vented extruder (cylinder temperature: 220°C, degree of vacuum: 760 mmHg), thereby obtaining a pellet-like AES resin (B1). The graft ratio of the obtained AES resin (B1) was 70%, and the limiting viscosity [$\eta$] of the acetone-soluble matter was 0.47 dl/g.

<Diene-based Rubber-reinforced Resin (B2)>

A polymerization container equipped with a stirrer was charged with 280 parts of water, 60 parts of polybutadiene latex (in terms of solid content) having a weight-average particle diameter of 0.26 $\mu$m and a gel fraction of 90% as a diene-based rubbery polymer, 0.3 parts of sodium formaldehyde sulfoxylate, 0.0025 parts of ferrous sulfate, and 0.01 parts of disodium ethylenediaminetetraacetate, the mixture was deoxidized and heated to 60°C while being stirred in a nitrogen stream, and a monomer mixture formed of 10 parts of acrylonitrile, 30 parts of styrene, 0.2 parts of t-dodecyl mercaptan, and 0.3 parts of cumene hydroperoxide was continuously added dropwise thereto at 60°C over 5 hours. After completion of the dropwise addition, the polymerization temperature was set to 65°C, and the mixture was continuously stirred for 1 hour to complete the polymerization, thereby obtaining a latex of a graft copolymer. The polymerization conversion rate was 98%. Thereafter, 0.2 parts of 2,2'-methylene-bis(4-ethylene-6-t-butylphenol) was added to the obtained latex, calcium chloride was added thereto for coagulation, and the resultant was subjected to washing, filtering, and drying steps, thereby obtaining a powdery ABS resin (B2). The graft ratio of the obtained ABS resin (B2) was 40%, and the limiting viscosity [$\eta$] of the acetone-soluble matter was 0.38 dl/g.

<Non-rubber-reinforced Vinyl-based Resin (C)>

As the AS resin (C), an acrylonitrile-styrene copolymer in which the proportions of an acrylonitrile unit and a styrene unit were each 27% and 73%, the limiting viscosity [$\eta$] (in methyl ethyl ketone, 30°C) of the acetone-soluble matter was 0.47 dl/g, and the glass transition temperature (Tg) was 103°C was used.

<Lubricant (D)>

Any of the following lubricants was used.

D1: "KAO WAX 85P" (manufactured by Kao Corporation, melting point of 85°C to 87°C, hardened castor oil, triglyceride saturated fatty acid ester) was used.

D2: "RHEODOL MS-60" (manufactured by Kao Corporation, melting point of 59°C to 62°C, monostearic acid glyceride, monoglyceride saturated fatty acid ester)
D3: "ELVALOY HP661" (manufactured by Dow-Mitsui Polychemical Co., Ltd., melting point of 62°C, ethylene/acrylic acid ester-based ternary copolymer)
D4: "TEGOMER H-Si6441P" (manufactured by EVONIK, melting point of 53°C, polyester-modified polysiloxane)

<Pigment>

"ROYAL BLACK 971G" (trade name, manufactured by ECCA CO., LTD.) was used. This is a masterbatch containing 40% of carbon black using an acrylonitrile-styrene copolymer as a base resin.

[Examples 1 to 6 and Comparative Examples 1 to 12]

The components listed in Table 1 were mixed with each other using a Henschel mixer at the blending ratios (parts) listed in Table 1, and melt-kneaded using a vented twin screw extruder (manufactured by The Japan Steel Works, Ltd., TEX44, barrel setting temperature: 260°C), thereby obtaining pellets of resin compositions. The MFR of the obtained pellets was measured by the above-described method. Further, the test pieces were molded by the above-described method, the IMP, HDT, and color developability were measured, and the squeaking sound prevention property was evaluated.

[Table 1]

| | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 11 | Comparative Example 12 |
|---|---|---|---|---|---|---|---|---|---|---|---|---|---|---|---|---|---|---|
| Polycarbonate resin | (A) | 50 | 50 | 50 | 50 | 50 | 50 | 50 | 50 | 50 | 50 | 50 | 50 | 50 | 20 | 80 | 50 | 50 |
| Rubber-reinforced vinyl-based resin | (B1) | 6 | 6 | 3 | 6 | 10 | 6 | 1 | 6 | 20 | 1 | 6 | 0 | 10 | 6 | 6 | 6 | 6 |
| | (B2) | | | 3 | 6 | | | | | | | | 6 | 10 | | | | |
| Non-rubber-reinforced vinyl-based resin | (C) | 44 | 44 | 44 | 38 | 40 | 44 | 49 | 44 | 30 | 49 | 44 | 44 | 30 | 74 | 14 | 44 | 44 |
| Lubricant | (D1) | 2 | 5 | 2 | 2 | 2 | | 0 | 0 | 0 | 5 | 10 | 2 | 2 | 2 | 2 | | |
| | (D2) | | | | | | 5 | | | | | | | | | | | |
| | (D3) | | | | | | | | | | | | | | | | 2 | |
| | (D4) | | | | | | | | | | | | | | | | | 2 |
| Pigment | | 2 | 2 | 2 | 2 | 2 | 2 | 2 | 2 | 2 | 2 | 2 | 2 | 2 | 2 | 2 | 2 | 2 |
| Fluidity | MFR [g/10 min] | 44 | 60 | 43 | 36 | 39 | 65 | 55 | 35 | 22 | 74 | 78 | 42 | 31 | 59 | 15 | 37 | 50 |
| Mechanical properties | C-Imp [kJ/m²] | 25 | 21 | 32 | 60 | 38 | 16 | 12 | 28 | 66 | 3 | 12 | 41 | 70 | 12 | 68 | 45 | 17 |
| | HDT [°C] | 96 | 91 | 96 | 97 | 100 | 90 | 95 | 99 | 101 | 89 | 87 | 96 | 99 | 91 | 105 | 98 | 95 |
| Color developability | L* (SCE) | 8.1 | 8.0 | 7.2 | 8.7 | 8.8 | 8.0 | 6.4 | 8.2 | 11.0 | 6.2 | 7.8 | 6.6 | 10.6 | 10.1 | 7.8 | 8.2 | 9.0 |
| | Gloss (%) | 103 | 103 | 102 | 100 | 102 | 102 | 102 | 103 | 99 | 101 | 101 | 101 | 99 | 103 | 103 | 99 | 101 |
| Squeaking sound | Abnormal sound risk value | 2 | 2 | 3 | 2 | 2 | 3 | 10 | 7 | 2 | 10 | 2 | 10 | 2 | 2 | 4 | 4 | 4 |

In the resin compositions and the molded articles of Examples 1 to 6 according to the present invention, since the contents of each of the components (A) to (D) were appropriate, all the evaluations of the fluidity, the mechanical properties (IMP and HDT), the color developability (L* and gloss), and the squeaking sound (abnormal sound risk value; quietness) were well-balanced and excellent.

Since the resin compositions of Comparative Examples 1 and 2 did not contain the lubricant (D), the squeaking sound was degraded.

In the resin composition of Comparative Example 1, since the content of the ethylene/α-olefin-based rubber-reinforced resin (B1) was extremely small, the mechanical properties were also degraded.

Since the resin composition of Comparative Example 3 did not contain the lubricant (D) and the content of the ethylene/α-olefin-based rubber-reinforced resin (B1) was extremely large, the color developability was degraded.

In the resin composition of Comparative Example 4, since the content of the ethylene/α-olefin-based rubber-reinforced resin (B1) was extremely small, the mechanical properties and the squeaking sound were degraded.

In the resin composition of Comparative Example 5, since the content of the lubricant (D) was extremely large, the mechanical properties were degraded.

The resin composition of Comparative Example 6 contained the diene-based rubber-reinforced resin (B2) instead of ethylene/α-olefin-based rubber-reinforced resin (B1), the squeaking sound was degraded.

In the resin composition of Comparative Example 7, since the total content of the rubber-reinforced vinyl-based resin (B) was extremely large, the color developability was degraded.

In the resin composition of Comparative Example 8, since the content of the polycarbonate resin (A) was extremely small, the mechanical properties and the color developability were degraded.

In the resin composition of Comparative Example 9, since the content of the polycarbonate resin (A) was extremely large, the fluidity and the squeaking sound were degraded.

Since the resin composition of Comparative Example 11 did not contain the saturated fatty acid ester having 12 or more carbon atoms as the lubricant (D) but contained another lubricant instead of the saturated fatty acid ester, the color developability and the squeaking sound were degraded.

Since the resin composition of Comparative Example 12 did not contain the saturated fatty acid ester having 12 or more carbon atoms as the lubricant (D) but contained another lubricant instead of the saturated fatty acid ester, the mechanical properties, the color developability, and the squeaking sound were degraded.

INDUSTRIAL APPLICABILITY

The resin composition of the present invention has excellent color developability and an excellent squeaking sound reducing property, and thus is useful as a molding material for an article used for vehicle interior and exterior components.

**Claims**

1. A thermoplastic resin composition comprising:

   a polycarbonate resin (A);
   a rubber-reinforced vinyl-based resin (B);
   a non-rubber-reinforced vinyl-based resin (C); and
   a lubricant (D),
   wherein the rubber-reinforced vinyl-based resin (B) includes an ethylene/$\alpha$-olefin-based rubber-reinforced resin (B1) obtained by graft polymerization of a vinyl-based monomer in a presence of at least an ethylene/$\alpha$-olefin-based rubbery polymer (b1),
   the non-rubber-reinforced vinyl-based resin (C) is a copolymer having at least an acrylonitrile unit and a styrene unit,
   the lubricant (D) is a lubricant having a saturated fatty acid ester having 12 or more carbon atoms, and
   in a case where a total amount of the polycarbonate resin (A), the rubber-reinforced vinyl-based resin (B), and the non-rubber-reinforced vinyl-based resin (C) is set to 100 parts by mass, the thermoplastic resin composition contains 30 to 70 parts by mass of the polycarbonate resin (A), 3 to 16 parts by mass of the rubber-reinforced vinyl-based resin (B), 3 to 16 parts by mass of the ethylene/$\alpha$-olefin-based rubber-reinforced resin (B1), and 1 to 8 parts by mass of the lubricant (D).

2. The thermoplastic resin composition according to Claim 1,
   wherein in a case where the total amount of the polycarbonate resin (A), the rubber-reinforced vinyl-based resin (B), and the non-rubber-reinforced vinyl-based resin (C) is set to 100 parts by mass, the thermoplastic resin composition contains 20 to 60 parts by mass of the non-rubber-reinforced vinyl-based resin (C).

3. The thermoplastic resin composition according to Claim 2,
   wherein the lubricant (D) is at least one kind of hydrogenated glycerin fatty acid ester.

4. The thermoplastic resin composition according to Claim 3,
   wherein the rubber-reinforced vinyl-based resin (B) further includes a diene-based rubber-reinforced resin (B2) obtained by graft polymerization of a vinyl-based monomer in a presence of a diene-based rubbery polymer (b2).

5. A molded article of the thermoplastic resin composition according to any one of Claims 1 to 4.

**EP 4 692 234 A1**

## INTERNATIONAL SEARCH REPORT

| International application No. |
|---|
| **PCT/JP2024/007558** |

**A. CLASSIFICATION OF SUBJECT MATTER**

*C08L 69/00*(2006.01)i; *C08K 5/101*(2006.01)i; *C08K 5/103*(2006.01)i; *C08L 25/12*(2006.01)i; *C08L 51/04*(2006.01)i; *C08L 51/06*(2006.01)i

FI:  C08L69/00; C08K5/101; C08K5/103; C08L25/12; C08L51/04; C08L51/06

According to International Patent Classification (IPC) or to both national classification and IPC

**B. FIELDS SEARCHED**

Minimum documentation searched (classification system followed by classification symbols)

C08L69/00; C08K5/101; C08K5/103; C08L25/12; C08L51/04; C08L51/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-008261 A (TECHNO POLYMER CO., LTD.) 18 January 2016 (2016-01-18) claims, paragraph [0001], examples | 1-5 |
| Y | JP 2018-109127 A (TORAY INDUSTRIES, INC.) 12 July 2018 (2018-07-12) claims, examples | 1-5 |
| A | JP 2004-524382 A (BAYER AKTIENGESELLSCHAFT) 12 August 2004 (2004-08-12) claims, examples | 1-5 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **10 May 2024** | **21 May 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/007558**

| Patent document cited in search report | | | Publication date (day/month/year) | Patent family member(s) | | | Publication date (day/month/year) |
|---|---|---|---|---|---|---|---|
| JP | 2016-008261 | A | 18 January 2016 | (Family: none) | | | |
| JP | 2018-109127 | A | 12 July 2018 | (Family: none) | | | |
| JP | 2004-524382 | A | 12 August 2004 | US | 2006/0235123 | A1 | |
| | | | | claims, examples | | | |
| | | | | EP | 1334152 | A1 | |
| | | | | CN | 1484673 | A | |
| | | | | KR | 10-2003-0053523 | A | |

Form PCT/ISA/210 (patent family annex) (July 2022)

**EP 4 692 234 A1**

**Patent documents cited in the description**

- JP 2023052919 A
- JP 2018095722 A
- JP 2021031561 A
- JP 3403828 B
- JP H11269206 A